# EUROPEAN PATENT APPLICATION

(11) **EP 4 596 153 A1**
(43) Date of publication of application: **06.08.2025**
(21) Application number: 25154958.0
(22) Date of filing: 30.01.2025
(51) Int. Cl.: B23D 59/00, B27B 5/065, B23D 47/02

(54) **SAWING MACHINE CONFIGURED TO MONITOR A SLOT DEFINING A CUTTING LINE FOR SAID SAWING MACHINE**

(30) Priority: 31.01.2024 IT 202400001941
(71) Applicant: SCM Group S.p.A., 47921 Rimini (RN) (IT)
(72) Inventor: GIAVOLUCCI, Gianluca, 47921 RIMINI (RN) (IT); SENTINI, Massimiliano, 47921 RIMINI (RN) (IT)
(74) Representative: Tiburzi, Andrea

(57) **Abstract**

The present invention relates to a sawing machine (M) configured to monitor a slot (S) defining a cutting line (CL) for said sawing machine (M). Said sawing machine (M) comprises at least one a working station (WS) and said slot (S) is arranged on a working plane (WP) of said working station (WS) and has a first end (SE₁) and a second end (SE₂).

The working station (WS) comprises a cutting unit (GB) for cutting at least one piece (P1, P2) along said cutting line (CL) and said cutting unit (GB) is movable between the first end (SE₁) and the second end (SE₂) of said slot (S).

The sawing machine (M) comprises detecting means (SD) for detecting the width of said slot (S), storage means (SM) in which a reference width W_{R} is stored, and a logic control unit (U) configured to acquire said width from said detecting means (SD), to compare said acquired width with said reference width W_{R}, and, if said acquired width is greater than said reference width W_{R}, to generate a signal corresponding to said acquired width.

## Description

The present invention relates to a sawing machine configured to monitor a slot defining a cutting line for said sawing machine.

In particular, said slot is arranges on a working plane of a working station (being part of the sawing machine) and allows to the passage of at least one blade of a cutting unit of said working station to cut one or more pieces, and the present invention refers to the structure of said sawing machine which allows to verify whether the width of said slot increases over time, due to the several machining carried out by the sawing machine.

### Prior art

A sawing machine of known type comprises at least one loading station, one unloading station and one working station, arranged between said loading station and said unloading station.

The working station comprises a support plane on which workpieces are positioned, and a pusher system to exert a push on said workpieces so that said workpieces advance on said support plane along a forward direction towards the working station.

Said pusher system is a system of movable arms, each of which is provided with a gripper for gripping a piece and pushing said piece on said support plane towards said working station (so that said piece is machined) and beyond said working station.

The working station is a cutting station and comprises a cutting unit for cutting said pieces along a cutting line, transverse to said forward direction.

The cutting line is defined by a slot extending longitudinally on a working plane of said working station.

In order to cut said pieces, said cutting unit is movable along said cutting line.

In general, the cutting unit can cut single pieces or a group of pieces or a plurality of groups of pieces.

Said cutting unit can comprise at least one blade.

In particular, said cutting unit comprises a first blade for scoring a piece (called scoring blade) and a second blade for cutting said first piece.

The unloading station can comprise a plane or a plurality of planes, wherein the planes of said plurality of planes are parallel to each other.

The pieces machined by the working station reach the unloading station and are collected by an operator or a mechanical arm.

A disadvantage of said sawing machine of a known type is given by the fact that the width of the slot present on the working plane of the working station can increase over time, due to various factors.

The slot is formed on the working plane (in general a working plane made of Bakelite) by the passage of at least one blade of the cutting unit.

In general, said at least one blade has a thickness of 4,4 mm.

As a result, initially the slot has a width equal to the thickness of the said blade, i.e. 4,4mm.

However, the width of the said slot can reach 10 mm or even 12 mm over time.

This is due to the fact that when a piece is to be cut and the waste of material is to be reduced (obtaining machining chips with a width of 1mm or 2mm) the speed of the cutting unit must be high and consequently requires at least one blade may be subjected to bending.

The bending of said blade causes an increase in the width of the slot up to 10 mm or 12 mm over time.

The increase in the width of the slot causes malfunctions for the sawing machine.

In fact, a greater quantity of machining chips can fall inside the slot and therefore inside the working station, for example on the cutting unit and/or on an area in which the cables to move said cutting unit are arranged.

### Aim of the invention

Aim of the present invention is to overcome said disadvantage by providing a sawing machine configured to monitor over time the width of a slot of the working station of the sawing machine, wherein said slot defines a cutting line for the cutting unit of the working station.

A further aim of the present invention is to provide a sawing machine configured to generate a signal when the width of the slot is greater than a predetermined width.

### Object of the invention

It is therefore object of the invention a sawing machine for sawing pieces comprising:
- a support plane for at least one piece,
- a pusher system configured to push said at least one piece on said support plane along a forward direction,
- at least one working station comprising:
   a working plane;
   a slot defining a cutting line, wherein said slot is arranged on said working plane and has a first end and a second end and said cutting line is transverse to said forward direction,
   a cutting unit for cutting at least said piece along said cutting line,
   wherein said cutting unit is movable between said first end and said second end of said slot;
- detecting means for detecting a width of said slot,
- storage means in which a reference width is stored,
- a logic control unit configured to:
   ∘ acquire said width from said detecting means,
   ∘ compare said acquired width with said reference width W_{R},
   ∘ if said acquired width is greater than said reference width, generate a signal corresponding to said acquired width.

Further embodiments of the sawing machine are described in the dependent claims.

### Attached figure list

The present invention will be now described, for illustrative, but not limitative purposes, according to its embodiment, making particular reference to the enclosed figures, wherein:

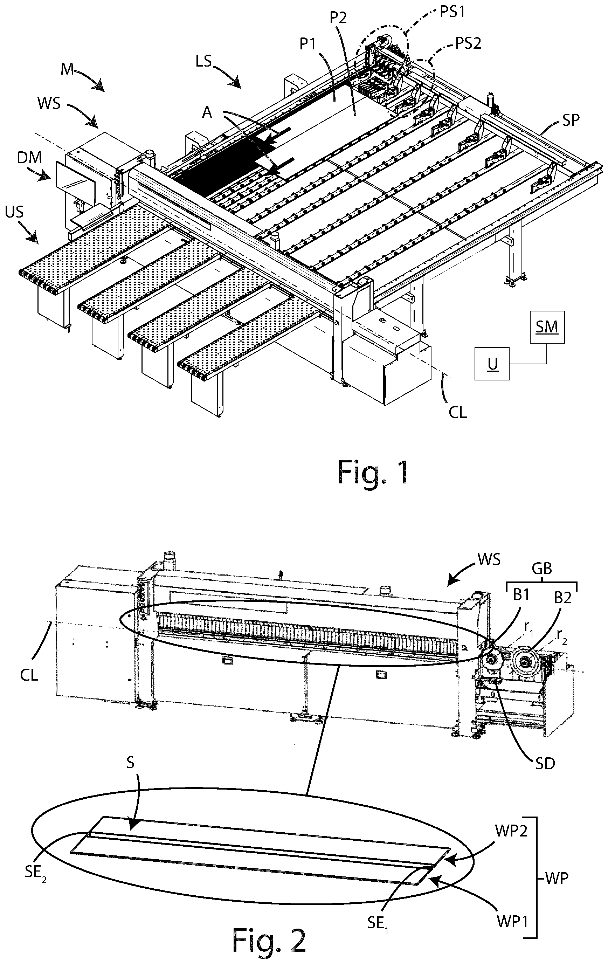

Figure 1 is a schematic view of a sawing machine, according to the invention, wherein said sawing machine comprises a working station and an unloading station, wherein said working station comprises a movable cutting unit along a slot defining a cutting line;
Figure 2 is a schematic view of the working station from which a part has been removed to show a slot present on the working plane of the working station which defines a cutting line, a cutting unit movable along said slot, wherein said cutting unit comprises a first blade for scoring a piece and a second blade for cutting said first piece, as well as detecting means for detecting the width of said slot;

### Detailed description of the invention

With particular reference to Figure 1, a sawing machine M for sawing pieces, object of the invention.

Said pieces can, for example, be panels made of wood, ceramic, plastic, metal, glass, fibreglass.

In the embodiment that is described, said pieces are wooden panels.

The sawing machine M comprises a loading station LS, an unloading station US and a working station WS, arranged between said loading station LS and said unloading station US.

The loading station LS comprises a support plane SP on which one or more workpieces are positioned and a pusher system to exert a push on said workpieces so that said workpieces move said workpieces on support plane SP along a forward direction A towards the working station WS.

In the embodiment that is described, a first workpiece P1 and a second workpiece P2 are positioned on the support plane SP.

Said pusher system comprises at least a first group of pushers PS1 to push said first piece P1 and a second group of pushers PS2, different from said first group of pushers, to push at least said second piece, independently of said first piece P1.

The unloading station US can comprise a further support plane or a plurality of further support planes.

In the embodiment that is described, said unloading station US comprises a plurality of further support planes. The further support planes of said plurality of further support planes are parallel to each other.

The pieces P1, P2 machined by said working station WS reach the unloading station US and are collected by an operator or a mechanical arm.

The working station WS is a cutting station.

Said working station WS comprises:
- a slot S defining a cutting line CL, wherein said slot S has a first end SE₁ and a second end SE₂ (opposite to said first end SE₁) and said cutting line CL is transverse to said forward direction A,
- a cutting unit GB for cutting said pieces P1, P2 along said cutting line CL, wherein said cutting unit GB is movable between said first end SE₁ and said second end SE₂ of said slot S.

In particular, the working station WS comprises a working plane WP and the slot S divides said working plane WP in two half-planes: a first hal-plane WP1 and a second half-plane WP2.

Said slot S is an opening that extends longitudinally on said working plane WP is delimited by an edge of said first half-plane WP1 and by an edge of said second half-plane WP2.

With particular reference to the cutting line CL, said cutting line CL is defined by a transversal axis (in particular orthogonal) with respect to the forward direction A of the pieces P1, P2 on the support plane SP.

With particular reference to the cutting unit GB, said cutting unit GB can comprise one or more blades.

In the embodiment that is described, said cutting unit GB comprises a first blade B1 for scoring at least one piece and a second blade B2 for cutting said at least one piece, as well as a motor, preferably an electric motor (not shown), for moving said cutting unit GB from a rest position, in which said cutting unit GB is inside a casing C1 included in the working station W, to an operating position, in which said cutting unit GB moves inside said slot S, between said first end SE₁ and said second end SE₂.

In other words, through the motor, the cutting unit GB moves from the first end SE₁ to the second end SE₂ of the slot S and vice versa.

Furthermore, said cutting unit GB comprises a first motor (not shown), preferably a first electric motor, for rotating said first blade B1 with a first rotation speed and a second motor (not shown), preferably a second electric motor, for rotating said second blade B2 with a second rotation speed.

The first blade B1 and the second B2 of the cutting unit GB are aligned along a same axis (coinciding with the axis that defines the cutting line CL) and rotate around a respective rotation axis r₁, r₂ perpendicular to said axis.

Said sawing machine M comprises:
- detecting means SD for detecting a width of said slot S,
- storage means SM in which a reference width W_{R} is stored,
- a logic control unit U configured to:
   ∘ acquire said width from said detecting means SD,
   ∘ compare said acquired width with said reference width W_{R},
   ∘ if said acquired width is greater than said reference width W_{R}, generate a signal corresponding to said acquired width.

In the example that is described, said detecting means SD are arranged inside the working station WS.

In particular, said detecting means SD are arranged on said cutting unit GB.

In the example that is described, said detecting means SD can comprise a distance sensor for detecting a width of said slot S.

In an alternative, said detecting means SD comprise a measuring light grid for measuring a width of said slot S.

Said sawing machine M can comprise displaying means DM for displaying data and said logic control unit U is configured to send a signal to said displaying means DM for displaying a value associated with to said width acquired by the logic control unit I through said detecting means SD.

Furthermore, said sawing machine M can comprise alarm means and said logic control unit U can be configured to activate said alarm means, when said width acquired by the logic control unit U is greater than said reference width W_{R} stored in said storage means SM.

Advantageously, when said width acquired by the logic control unit U is greater than said reference width W_{R} stored in said storage means SM, said logic control unit U can be configured to send an alarm signal to said displaying means DM to indicate a risk of damage to the sawing machine M.

It is preferable that the logic control unit U is configured to send at least one signal motor of said cutting unit GB to reduce a speed with which said cutting unit GB moves between said first end SE₁ and second end SE₂.

It is furthermore preferable that the logic control unit U is configured to send at least one signal to the first motor to reduce said first rotation speed of said first blade B1, when said width is greater than said reference width W_{R}.

Finally, in order to carry out the cuts of the workpieces a cutting program is stored in the storage means of the sawing machine M.

Said cutting program can comprise at least one parameter associated with a width of a machining chip.

In other words, the width of said machining chip is a parameter already stored in the cutting program.

The machining chip is a residual part of a piece that derives from the machining of said piece.

The width of the machining chip is the size of the machining chip in the forward direction A.

Said logic control unit U can be configured to prevent the start of said cutting program when the width of a machining chip is less than 5mm and when said width (of said slot S) acquired by the logic control unit U is greater than said reference width W_{R} stored in said storage means SM.

Consequently, if an operator sets a cutting program in which the width of the machining chip is a parameter having a value less than 5mm, the cutting program is not executed by the logic control unit U if said acquired width is greater than said reference width W_{R}.

### Advantages

Advantageously, the sawing machine M object of the present invention allows to monitor over time the width of the slot of the working plane of the working station.

Furthermore, it is preferable that the sawing machine M allows to generate a signal when the width of said slot is greater than a predetermined width.

The present invention has been described for illustrative, but not limitative purposes, according to its preferred embodiment, but it is to be understood that variations and/or modifications can be carried out by a skilled in the art, without departing from the scope thereof, as defined according to enclosed claims.

## Claims

1. Sawing machine (M) for sawing pieces comprising:
- a support plane (SP) for at least one piece (P1, P2),
- a pusher system (PS1, PS2) configured to push said at least one piece (P1, P2) on said support plane (SP) along a forward direction (A),
- at least one working station (WS) comprising:
a working plane (WP);
a slot (S) defining a cutting line (CL), wherein said slot (S) is arranged on said working plane (WP) and has a first end (SE₁) and a second end (SE₂) and said cutting line (CL) is transverse to said forward direction (A),
a cutting unit (GB) for cutting at least said piece (P1, P2) along said cutting line (CL), wherein said cutting unit (GB) is movable between said first end (SE₁) and said second end (SE₂) of said slot (S);
- detecting means (SD) for detecting a width of said slot (S),
- storage means (SM) in which a reference width W_{R} is stored,
- a logic control unit (U) configured to:
∘ acquire said width from said detecting means (SD),
∘ compare said acquired width with said reference width W_{R},
∘ if said acquired width is greater than said reference width W_{R}, generate a signal corresponding to said acquired width.

2. Sawing machine (M) according to claim 1, wherein said detecting means (SD) are arranged inside said working station (WS).

3. Sawing machine (M) according to the previous claim, wherein said detecting means (SD) are arranged on said cutting unit (GB).

4. Sawing machine (M) according to any one of claims 1-3, wherein said detecting means (SD) comprise a distance sensor for detecting a width of said slot (S).

5. Sawing machine (M) according to any one of claims 1-3, wherein said detecting means (SD) comprise a measuring light grid for measuring a width of said slot (S).

6. Sawing machine (M) according to any one of the previous claims, wherein said sawing machine (M) comprises displaying means (DM) for displaying data and said logic control unit (U) is configured to send a signal to said displaying means (DM) for displaying a value associated with to said acquired width.

7. Sawing machine (M) according to the previous claim, wherein said logic control unit (U) is configured to send an alarm signal to said displaying means (DM) when said acquired width is greater than said reference width W_{R}.

8. Sawing machine (M) according to any one of the previous claims, wherein said sawing machine (M) comprises alarm means and said logic control unit (U) is configured to activate said alarm means, when said acquired width is greater than said reference width W_{R}.

9. Sawing machine (M) according to any one of the previous claims, wherein
said cutting unit (GB) comprises a first blade (B1) and a second blade (B2),
said sawing machine (M) comprises a motor for moving said cutting unit (GB), and
said logic control unit (U) is configured to send at least one signal to said motor of said cutting unit (GB) to reduce a speed with which said cutting unit (GB) moves between said first end (SE₁) and said second end (SE₂) of said slot (S), when said acquired width is greater than said reference width W_{R}.

10. Sawing machine (M) according to any one of the previous claims, wherein a cutting program is stored in said storage means (SM) and said cutting program comprises at least one parameter associated with a width of a machining chip, and wherein said logic control unit (U) is configured to prevent the start of said cutting program when the width of a machining chip is less than 5mm and when said width acquired is greater than said reference width W_{R}.
